# EUROPEAN PATENT SPECIFICATION

(11) **EP 4 034 585 B1**
(45) Date of publication and mention of the grant of the patent: **02.08.2023**
(21) Application number: 20772348.7
(22) Date of filing: 23.09.2020
(51) Int. Cl.: C08G 59/50, C08G 59/56, C09D 163/00, C08G 59/18

(54) **HARDENER FOR EPOXY CASTING RESINS**
HÄRTER FÜR EPOXIDGIESSHARZE
DURCISSEUR POUR RÉSINES DE COULÉE ÉPOXY

(30) Priority: 25.09.2019 EP 19199572
(43) Date of publication of application: 03.08.2022
(73) Proprietor: Sika Technology AG, 6340 Baar (CH)
(72) Inventor: PARENT, Arnaud, 95280 Jouy-le-Moutier (FR); KASEMI, Edis, 8046 Zürich (CH); LEBOEUF, Bertrand, 95310 Saint-Ouen-l'Aumône (FR); CHAIGNON-LESETRE, Fleur, 60590 Serifontaine (FR)
(74) Representative: Sika Patent Attorneys
(86) International application number: PCT/EP2020/076582
(87) International publication number: WO 2021/058574

(56) References cited:
- US-A1- 2015 344 615
- US-A1- 2017 218 114
- US-B2- 9 796 661

## Description

### Technical field

A hardener for epoxy resins and its use in casting resins to form completely transparent articles.

### State of the art

Epoxy resin compositions curing at ambient temperatures by way of amine hardeners are widely used as casting resin, coating or adhesive. An example of a casting resin application is the manufacture of transparent, hard and tough resinous articles, which have a glass-like appearance and can be used for functional and/or decorative purposes. Such casting resins allow to incorporate shaped materials, for example pieces of wood or stone, and make them appear in a shiny and highly aesthetic way. For such an application, the casting resin should be applicable in thick layers such as 5 to 50 mm and, after curing, have a high glass transition temperature (Tg), preferably above 55°C, and a high clarity, i.e. be completely transparent without any haziness, turbidity or other kind of visible inhomogeneity. This is not easy to achieve, as many amine hardeners tend to cause a hazy or turbid appearance. Furthermore, the epoxy curing reaction is highly exothermic and therefore, the freshly mixed resin tends to overheat when applied in thick layers, which can lead to discolorations and/or bubbles. To achieve an aesthetically good result, a hardener is needed which, upon reaction with the epoxy resin, generates only a moderate heat peak, at still fast and reliable curing, without the formation of any haziness within the cured resin or on its surface. Finally, the cured transparent article should have a high robustness against yellowing in order not to loose its original look upon exposure to light.

Epoxy resin compositions for such a use are known in the market. They typically contain high amounts of alkylphenols, such as nonylphenol. Alkylphenols are diluents and entail to the resin a high clarity and a low heat generation at still fast and reliable curing, but they are toxic compounds for humans and the environment, requiring special safety measures for their handling. Furthermore, alkylphenols and other type of diluents remain unreacted in the cured resin and can be released therefrom by way of migration, extraction or evaporation, which is exacerbating their toxicity. In addition, they may also have an undesired softening effect on the cured resin, which is lowering the Tg.

New hardeners for epoxy casting resins are therefore needed, which are free from toxic diluents such as nonylphenol or the like and are able to give a similar performance regarding low heat generation, low reaction enthalpy, fast cure and high clarity, along with a high Tg.

An adduct of 1,2-propanediamine and cresyl glycidyl ether is known from US 9,796,661. It is useful for the formulation of low emission epoxy floors alone or in combination with non-adducted amines.

### Summary of the invention

The task of this invention is to provide a hardener for epoxy resins, which is free from toxic diluents and is particularly suitable for casting resins, enabling the production of transparent cast articles with a high clarity, a high Tg and a high robustness against yellowing.

This task is achieved by the hardener according to claim 1 comprising at least one amine of the formula (I) and an amine-functional adduct of at least one polyoxyalkylene polyamine and a diepoxide.

The amine of the formula (I) is a mono adduct of a primary diamine such as 1,2-propanediamine and an aromatic monoepoxide such as cresyl glycidyl ether. In combination with the polyoxyalkylene polyamine adduct, the inventive hardener surprisingly enables the casting of the desired articles with a high Tg, a fully water-clear transparency and a smooth, tack-free surface, at low heat generation with fast and reliable curing, without the addition of toxic diluents such as nonylphenol. The hardener has a low viscosity to allow easy mixing with epoxy resins and easy application of the mixed resin by pouring in one or several thick layers, for example in the range of 5 to 50 mm. Additionally, the cured articles show a very good UV resistance with a high robustness against yellowing upon exposure to light.

The inventive hardener enables epoxy resin compositions, which are particularly suitable as casting resin for the production of transparent articles of high clarity with a glass-like appearance and high robustness against yellowing, into which shaped materials, such as pieces of wood or stone, dried flowers, artificial pearls or decorative flakes, may be incorporated. The addition of dyes enables glass-like resinous articles with a transparent coloured look. Thanks to the absence of toxic diluents, such as nonylphenol, these articles are highly safe in use.

Other aspects of the invention are described in other indepentent claims. Preferred aspects of the invention are described in dependent claims.

### Detailed description of the invention

A subject of the invention is a hardener for epoxy resins comprising
- at least one amine of the formula (I), 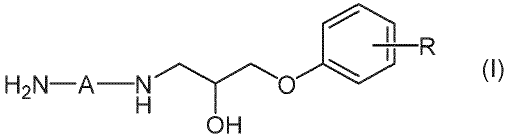 where
   A is a divalent C₂ to C₁₅ alkylene, cycloalkylene or arylalkylene group, and
   R is a C₁ to C₁₅ alkyl group optionally containing unsaturated bonds, and
- an amine-functional adduct of at least one polyoxyalkylene polyamine and a diepoxide.

Substance names starting with "poly", such as polyamine or polyepoxide, refer to substances carrying two or more of the respective functional groups per molecule. The term "primary amine group" refers to an amine group, which is connected to only one organic moiety and carries two hydrogens; the term "secondary amine group" refers to an amine group, which is connected to two organic moieties, which may also be a part of a ring together, and carries one hydrogen; and the term "tertiary amine group" refers to an amine group, which is connected to three organic moieties, two or three of which may also be part of one or more rings, and carries no hydrogens.

The term "amine hydrogen" refers to the hydrogens of primary and secondary amine groups.

The term "amine hydrogen equivalent weight" refers to the mass of an amine or an amine containing composition, which contains one mol equivalent of amine hydrogens.

The term "molecular weight" refers to the molar mass (given in grams per mol) of a molecule. The term "average molecular weight" refers to the number average molecular weight Mₙ of a polydispersed mixture of oligomeric or polymeric molecules or molecule moieties. It is usually determined by gel permeation chromatography (GPC) against a polystyrene standard.

In this document, the term "room temperature" refers to a temperature of 23°C. The term "pot life" refers to the time period, during which a multi component composition can be applied after mixing of the components without defects.

Preferably, A is a divalent C₂ to C₁₀ alkylene, cycloalkylene or arylalkylene group.

More preferably, A is selected from the group consisting of 1,2-ethylene, 1,2-propylene, 2-methyl-1,5-pentylene, 1,6-hexylene, 2,2(4),4-trimethyl-1,6-hexamethylene, 1,3-phenylen-bis(methylene), 1,4-phenylen-bis(methylene), 1,2-cyclohexylene, 1,3-cyclohexylene, 1,4-cyclohexylene, (1,5,5-trimethylcyclohexan-1-yl)me-than-1,3, 4(2)-methyl-1,3-cyclohexylene, 1,3-cyclohexylen-bis(methylene) and 1,4-cyclohexylen-bis(methylene).

Preferred thereof is 1,2-ethylene, 1,2-propylene, 2-methyl-1,5-pentylene, 1,6-hexylene or 1,2-cyclohexylene.

Particularly preferred is 1,2-propylene. Such an amine of the formula (I) enables articles of a particularly high clarity and robustness against yellowing.

Preferably, R ist methyl, tert.butyl, nonyl, dodecyl or 8, 11-pentadecadienyl. Such amines of the formula (I) are particularly easy to manufacture.

Preferably, R is free of unsaturated bonds. Such amines of the formula (I) are particularly robust against yellowing.

Particularly preferred, R is methyl or tert.butyl.

Most preferred, R ist methyl, which is preferably in ortho-position. Such an amine of the formula (I) is easy to manufacture, enables a particularly fast and reliable curing and a high robustness against yellowing.

Most preferred, A is 1,2-propylene and R is ortho-methyl.

The amine of the formula (I) is preferably prepared by reacting a primary diamine of the formula H₂N-A-NH₂ and a glycidyl ether of the formula 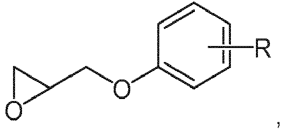 where A and R have the already given meanings.

Particularly suitable primary diamines for this preparation are 1,2-ethanediamine, 1,2-propanediamine, 1,3-propanediamine, 1,4-butanediamine, 1,3-butanediamine, 2-methyl-1,2-propanediamine, 1,3-pentanediamine, 1,5-pentanediamine, 2,2-dimethyl-1,3-propanediamine, 1,6-hexanediamine, 1,5-diamino-2-methylpentane, 1,7-heptanediamine, 1,8-octanediamine, 2,5-dimethyl-1,6-hexanediamine, 1,9-nonanediamine, 2,2(4),4-trimethyl-1,6-hexanediamine, 1,10-decanediamine, 1,2-cyclohexanediamine, 1,3-cyclohexanediamine, 1,4-cyclohexanediamine, 1-amino-3-aminomethyl-3,5,5-trimethylcyclohexane, 4(2)-methyl-1,3-cyclohexanediamine, 1,3-bis(aminomethyl)cyclohexane, 1,4-bis(aminomethyl)cyclohexane, 2,5(2,6)-bis(aminomethyl)bicyclo[2.2.1]heptane, 1,3-bis(aminomethyl)benzol or 1,4-bis-(aminomethyl)benzol.

Preferred thereof is 1,2-ethanediamine, 1,2-propanediamine, 1,6-hexanediamine, 1,5-diamino-2-methylpentane or 1,2-cyclohexanediamine. Particularly preferred is 1,2-propanediamine.

Particularly suitable glycidyl ethers for this preparation are cresyl glycidyl ether, tert.butylphenyl glycidyl ether, 4-nonylphenyl glycidyl ether, 4-dodecylphenyl glycidyl ether or cardanol glycidyl ether, which contains as main ingredient the glycidyl ether of 3-(8,11-pentadecadienyl)phenol.

Preferred thereof are cresyl glycidyl ether or tert.butylphenyl glycidyl ether.

Most preferred is cresyl glycidyl ether, partricularly ortho-cresyl glycidyl ether. Preferably, a commercially available quality of cresyl glycidyl ether is used, such as Araldite^{®} DY-K (from Huntsman), Heloxy^{™} Modifier 62 (from Momentive) or Erisys^{®} GE-10 (from CVC).

The primary diamine and the glycidyl ether are preferably reacted at a temperature in the range of 40 to 120°C, preferably 50 to 110°C.

A preferred ratio is in the range of 0.8 to 5 mol primary diamine per mol epoxy groups of the glycidyl ether. If the primary diamine is used in a stochiometric excess, the unreacted primary diamine is preferably removed from the product by distillation under vacuum.

A particularly preferred amine of the formula (I) is prepared by the reaction of 1,2-propanediamine and cresyl glycidyl ether in a molar ratio in the range of 2/1 to 4/1, followed by removing unreacted 1,2-propanediamine from the product by a distillation process, particularly a thin-film or short-path distillation process.

The product from such a preparation may contain, besides the amine of the formula (I), some higher adducted compounds, particularly a bis-adduct of the formula 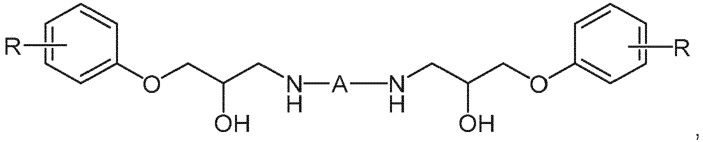 where A and R have the already given meanings.

The hardener for epoxy resin further comprises an amine-functional adduct of at least one polyoxyalkylene polyamine and a diepoxide.

The oxyalkylene groups are preferably selected from oxyethylene groups, oxy-1,2-propylene groups, oxy-1,3-propylene groups, oxy-1,4-butylene groups, oxy-1,2-butylene groups and mixtures thereof, optionally in combination with a starting molecule such as trimethylolpropane or glycerine.

The polyoxyalkylene polyamine is preferably selected from the group consisting of 4,7,10-trioxatridecane-1,13-diamine, α,ω-polyoxypropylene diamines with an average molecular weight Mₙ in the range of 170 to 500 g/mol, such as Jeffamine^{®} D-230 or Jeffamine^{®} D-400 (from Huntsman), and polyoxypropylene triamines with an average molecular weight Mₙ in the range of 300 to 500 g/mol, preferably polyoxypropylene triamines from the propoxylation of trimethylolpropane followed by amination of the OH endgroups, such as Jeffamine^{®} T-403 (from Huntsman).

Particularly preferred is an amine-functional adduct of a polyoxypropylene diamine or polyoxypropylene triamine with an average molecular weight Mₙ in the range of 170 to 500 g/mol or a mixture thereof, such as Jeffamine^{®} D-230, Jeffamine^{®} D-400 or Jeffamine^{®} T-403 (from Huntsman), and a diepoxide.

Most preferred is an amine-functional adduct of a polyoxypropylene triamine with an average molecular weight Mₙ in the range of 300 to 500 g/mol, preferably Jeffamine^{®} T-403 (from Huntsman), and a diepoxide.

The diepoxide of the adduct is preferably a diglycidyl ether, preferably bisphenol A diglycidyl ether, bisphenol F diglycidyl ether, bisphenol A/F diglycidyl ether, resorcino diglycidyl ether, 4,4'-dihydroxybiphenyl diglycidyl ether, 4,4'-dihydroxybenzophenone diglycidyl ether, a hydrated bisphenol A, F or A/F diglycidyl ether, 1,4-butanediol diglycidyl ether, neopenylglycol diglycidyl ether, 1,6-hexanediol diglycidyl ether, dimethylolcyclohexane diglycidyl ether, dipropylene glycol diglycidyl ether, tripropyleneglycol diglycidyl ether or a higher polypropyleneglycol diglycidyl ether.

Most preferred, the diepoxide of the adduct is a bisphenol A, bisphenol F or bisphenol A/F diglycidyl ether, particularly a bisphenol A diglycidyl ether. Such adducts enable cured products with particularly high hardness and resistance. Preferred is a technical grade of such diepoxides, as it is commercially available for example from Dow, Huntsman or Hexion.

Most preferred is an amine-functional adduct of at least one polyoxypropylene triamine with an average molecular weight Mₙ in the range of 300 to 500 g/mol and a bisphenol A diglycidyl ether or bisphenol F diglycidyl ether or bisphenol A/F diglycidyl ether, particularly a bisphenol A diglycidyl ether.

The amine-functional adduct is preferably prepared by reacting the polyoxyalkylene polyamine and the diepoxide in a molar ratio of polyoxyalkylene polyamine molecules per mol epoxy groups of the diepoxide in the range of 1.05 to 5, preferably 1.1 to 3, more preferably 1.1 to 2.

In the case of a polyoxyalkylene triamine, the molar ratio of the NH₂-groups per mol epoxy groups of the diepoxide is preferably in the range of 3.1 to 15, preferably 3.3 to 9, more preferably 3.3 to 6.

Such an adduct contains a mixture of amine-functional adduct molecules as well as a portion of non-reacted polyoxyalkylene polyamine. The non-reacted polyoxyalkylene polyamine, which was present during adduct formation, is considered as part of the adduct.

The adduct is preferably made at a temperature in the range of 40 to 150°C, preferably 50 to 120°C.

The preferred adducts enable hardeners with a particularly fast curing at low heat generation and good application properties.

The inventive hardener preferably contains amines of the formula (I) and the amine-functional adduct of at least one polyoxyalkylene polyamine and a diepoxide in a weight ratio in the range of 0.2/1 to 10/1, preferably 0.4/1 to 5/1.

The inventive hardener contains preferably at least one further amine, preferably at least one polyamine with at least 3 amine hydrogens.

Suitable further amines are aliphatic, cycloaliphatic or arylaliphatic polyamines with one primary and at least one secondary amine group, particularly N-benzyl-1,2-ethanediamine, N-benzyl-1,2-propanediamine, N-benzyl-2-methyl-1,5-pentanediamine, N-benzyl-1,3-bis(aminomethyl)benzene, N-(2-ethylhexyl)-1,3-bis(aminomethyl)benzene, 2-aminoethylpiperazine, 3-dimethylaminopropylamine (DMAPA), 3-(3-(dimethylamino)propylamino)propylamine (DMAPAPA), N-benzyldiethylenetriamine, N-benzyltriethylenetetramine, N"-benzyl-N,N'-bis(3-aminopropyl)ethylenediamine, or adducts of these polyamines with monoepoxides or diepoxides.

Suitable further amines are also aliphatic, cycloaliphatic or arylaliphatic polyamines with at least two primary amine groups, particularly 2,2-dimethyl-1,3-propanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2(4),4-trimethyl-1,6-hexanediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- or 1,4-diaminocyclohexane, 1,3-bis(aminomethyl)cyclohexane, 1,4-bis(aminomethyl)-cyclohexane, bis(4-aminocyclohexyl)methane, bis(4-amino-3-methylcyclohexyl)-methane, bis(4-amino-3-ethylcyclohexyl)methane, bis(4-amino-3,5-dimethylcyclohexyl)methane, bis(4-amino-3-ethyl-5-methylcyclohexyl)methane, 1-amino-3-aminomethyl-3,5,5-trimethylcyclohexane (isophorondiamine or IPDA), 2(4)-methyl-1,3-diaminocyclohexane, 2,5(2,6)-bis(aminomethyl)bicyclo[2.2.1]heptane (NBDA), 3(4),8(9)-bis(aminomethyl)tricyclo[5.2.1.0^{2,6}]decane, 1,4-diamino-2,2,6-trimethylcyclohexane (TMCDA), 1,8-menthanediamine, 3,9-bis(3-aminopropyl)-2,4,8,10-tetraoxaspiro[5.5]undecane, 1,3-bis(aminomethyl)benzene (MXDA), 1,4-bis(aminomethyl)benzene, bis(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine or higher oligomers of these diamines, bis(3-aminopropyl)polytetrahydrofurane or other polytetrahydrofuranediamines, polyoxyalkylen di- or -triamines, particularly Jeffamine^{®} D-230, Jeffamine^{®} D-400, Jeffamine^{®} D-2000, Jeffamine^{®} EDR-104, Jeffamine^{®} EDR-148, Jeffamine^{®} EDR-176, Jeffamine^{®} T-403, Jeffamine^{®} T-3000 or Jeffamine^{®} T-5000 (all from Huntsman), bis(6-aminohexyl)amine (BHMT), diethylenetriamine (DETA), triethylenetetramine (TETA), tetraethylenepentamine (TEPA), pentaethylenehexamine (PEHA) or higher homologues thereof, dipropylenetriamine (DPTA), N-(2-aminoethyl)-1,3-propanediamin (N3-Amine), N,N'-bis(3-aminopropyl)ethylenediamine (N4-amine), N,N'-bis(3-aminopropyl)-1,4-diaminobutane, N5-(3-aminopropyl)-2-methyl-1,5-pentanediamine, N3-(3-aminopentyl)-1,3-pentanediamine, N5-(3-amino-1-ethylpropyl)-2-methyl-1,5-pentanediamine, N,N'-bis(3-amino-1-ethylpropyl)-2-methyl-1,5-pentanediamine, or adducts of these polyamines with monoepoxides or diepoxides.

The further amine is preferably selected from the group consisting of N-benzyl-1,2-ethanediamine, N-benzyl-1,2-propanediamine, TMD, 1,2-, 1,3- or 1,4-diaminocyclohexane, 1,3-bis(aminomethyl)cyclohexane, 1,4-bis(aminomethyl)cyclohexane, bis(4-aminocyclohexyl)methane, IPDA, 2(4)-methyl-1,3-diaminocyclohexane, MXDA, polyoxypropylene diamines with an average molecular weight Mₙ in the range of 170 to 500 g/mol, polyoxypropylene triamines with an average molecular weight Mₙ in the range of 300 to 500 g/mol, TETA, TEPA, PEHA, N4-amine and mixtures thereof.

A particularly preferred further amine is a polyoxypropylene diamine with an average molecular weight Mₙ in the range of 170 to 500 g/mol, such as Jeffamine^{®} D-230 or Jeffamine^{®} D-400 (both from Huntsman) or a polyoxypropylene triamine with an average molecular weight Mₙ in the range of 300 to 500 g/mol, such as Jeffamine^{®} T-403 (from Huntsman).

Another particularly preferred further amine is IPDA, preferably as part of an amine-functional adduct with a diepoxide, preferably an adduct with bisphenol A diglycidyl ether or bisphenol F diglycidyl ether or bisphenol A/F diglycidyl ether.

Preferably, the inventive hardener contains further amines only to such an extent, that at least 50% of the number of all the amine hydrogens in the hardener are from both amines of the formula (I) and the amine-functional adduct of at least one polyoxyalkylene polyamine and a diepoxide.

The inventive hardener may contain at least one diluent.

Particularly suitable diluents are xylene, 2-methoxyethanol, dimethoxyethanol, 2-ethoxyethanol, 2-propoxyethanol, 2-isopropoxyethanol, 2-butoxyethanol, 2-phenoxyethanol, 2-benzyloxyethanol, benzyl alcohol, ethylene glycol, ethylene glycol dimethyl ether, ethylene glycol diethyl ether, ethylene glycol dibutyl ether, ethylene glycol diphenyl ether, diethylene glycol, diethylene glycol monomethyl ether, diethylene glycol monoethyl ether, diethylene glycol mono-n-butyl ether, diethylene glycol dimethyl ether, diethylene glycol diethyl ether, diethylene glycol di-n-butyl ether, propylene glycol butyl ether, propylene glycol phenyl ether, dipropylene glycol, dipropylene glycol monomethyl ether, dipropylene glycol dimethyl ether, dipropylene glycol di-n-butyl ether, diphenylmethane, diisopropylnaphthalene, petroleum fractions such as Solvesso^{®} grades (from Exxon), cardanol (from cashew nutshell oil, containing as main constituent 3-(8,11-pentadecadienyl)-phenol), styrenated phenol, bisphenols, aromatic hydrocarbon resins, particularly those containing phenol groups, alkoxylated phenols, particularly ethoxylated or propoxylated phenols, particularly 2-phenoxyethanol, adipates, sebacates, phthalates, benzoates, organic phosphoric or sulfonic acid esters or sulfonamides. Preferred are diluents with a boiling point of more than 200°C.

Particularly preferred is a diluent selected from benzyl alcohol, dipropylene glycol and cardanol.

The inventive hardener may contain at least one accelerator.

Particularly suitable accelerators are acids or compounds which can be hydrolyzed to acids, more particularly organic carboxylic acids such as acetic acid, benzoic acid, salicylic acid, 2-nitrobenzoic acid or lactic acid, organic sulfonic acids such as methanesulfonic acid, p-toluenesulfonic acid or 4-dodecylbenzene sulfonic acid, sulfonic esters such as methyl p-toluene sulfonate, or phosphoric acids; nitrates such as calcium nitrate; tertiary amines such as 1,4-diazabicyclo[2.2.2]octane, benzyldimethylamine, α-methylbenzyldimethylamine, triethanolamine, dimethylaminopropylamine, imidazoles such as N-methylimidazole, N-vinylimidazole or 1,2-dimethylimidazole, salts of such tertiary amines, quaternary ammonium salts such as benzyltrimethylammonium chloride, amidines such as 1,8-diazabicyclo-[5.4.0]undec-7-ene, guanidines such as 1,1,3,3-tetramethylguanidine, phenolic resins or Mannich bases such as 2-(dimethylaminomethyl)phenol or particularly 2,4,6-tris(dimethylaminomethyl)phenol, or polymers from phenol, formaldehyde and N,N-dimethyl-1,3-propanediamine, phosphites such as diphenyl or triphenyl phosphite, or compounds containing mercapto groups.

Preferred accelerators are selected from salicylic acid, p-toluenesulfonic acid, methyl p-toluene sulfonate, calcium nitrate, 2,4,6-tris(dimethylaminomethyl)phenol, and combinations thereof.

Preferably, the hardener is largely free from small amines with a molecular weight below 120 g/mol. Such a hardener is benefical with respect to low smell and glossy surface after cure.

Preferably, the hardener is largely free from highly toxic amines such as N-aminoethylpiperazine.

Preferably, the hardener is largely free from low boiling diluents with a boiling point of 200°C or less.

Preferably, the hardener is largely free from toxic diluents such as nonylphenol, other alkylphenols of high toxicity or bisphenol A.

Preferably, the hardener has a viscosity at 25°C, measured by cone/plate rheometer with a cone diameter 20 mm, cone angle 2° at a shear rate of 600 s⁻¹, in the range of 0.5 to 7 Pa·s, more preferably 1 to 6 Pa·s, particularly 2 to 5 Pa·s. Such a hardener enables a good applicability of the casting resin in the preferred layer thickness.

A further subject of the invention is an epoxy resin composition comprising
- a resin component comprising at least one epoxy resin, and
- a hardener component comprising the inventive hardener as described before.

The epoxy resin is preferably a liquid epoxy resin or a mixture of two or more liquid epoxy resins.

The term "liquid epoxy resin" means a technical grade of a polyepoxide with a glass transition temperature of below 25°C.

Optionally, a resin component comprising at least one liquid epoxy resin may further contain minor amounts of a solid epoxy resin.

Particularly suitable epoxy resins are aromatic epoxy resins, particularly glycidylization products of
- bisphenol A, bisphenol F or bisphenol A/F;
- resorcinol, hydroquinone or catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert.butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]-benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)-ethane, bis(4-hydroxyphenyl)ether or bis(4-hydroxyphenyl)sulfone;
- novolaks, which are preferably products of the condensation of phenols or cresols with formaldehyde, paraformaldehyde, acetaldehyde, crotonaldehyde, isobutyraldehyde, 2-ethylhexanal, benzaldehyde or furfuraldehyde;
- aromatic amines such as aniline, toluidine, 4-aminophenol, 4,4'-methylenediphenyldiamine, 4,4'-methylenediphenyldi-(N-methyl)amine, 4,4'-[1,4-phenylenbis(1-methylethyliden)]bisaniline (bisaniline P) or4,4'-[1,3-phenylen-bis(1-methylethyliden)]bisaniline (bisaniline M).

Suitable liquid epoxy resins are further aliphatic or cycloaliphatic polyepoxides, particularly
- glycidyl ethers of di-, tri- or tetrafunctional C₂- to C₃₀-alcohols, particularly ethylene glycol, propylene glycol, butylene glycol, hexanediol, octanediol, polypropylene glycols, dimethylolcyclohexane, neopentyl glycol, dibromoneopentyl glycol, castor oil, trimethylolpropane, trimethylolethane, pentaerythritol, sorbitol or glycerol, or alkoxylated glycerol or alkoxylated trimethylolpropane;
- a hydrogenated bisphenol A, F or A/F liquid resin, or the glycidylization product of a hydrogenated bisphenol A, F or A/F;
- a N-glycidyl derivate of an amide or a heterocyclic nitrogen base, such as triglycidyl cyanurate or triglycidyl isocyanurate, or reaction products of epichlorohydrin with hydantoin;
- epoxy resins from the oxidation of olefins, such as vinylcylohexene, dicyclopentadiene, cyclohexadiene, cyclododecadiene, cyclododecatriene, isoprene, 1,5-hexadiene, butadiene, polybutadiene or divinylbenzene.

The epoxy resin of the resin component is preferably an aromatic liquid epoxy resin based on a bisphenol. Particularly it is a technical grade of a bisphenol A, F or A/F diglycidyl ether. These resins are low viscous and enable a fast curing and a high hardness.

Optionally the resin component contains minor amounts of a solid bisphenol A resin or novolak glycidyl ethers.

Preferably the resin component further contains at least one reactive diluent, particularly an epoxy functional reactive diluent, particularly selected from the group consisting of butandiol diglycidyl ether, neopentylglycol diglycidyl ether, hexandiol diglycidyl ether, cyclohexanedimethanol diglycidyl ether, trimethylolpropane di- or triglycidyl ether, phenyl glycidyl ether, cresyl glycidyl ether, guiacol glycidyl ether, 4-methoxyphenyl glycidly ether, p-n-butylphenyl glycidyl ether, p-tert.butylphenyl glycidyl ether, 4-nonylphenyl glycidyl ether, 4-dodecylphenyl glycidyl ether, cardanol glycidyl ether, benzyl glycidyl ether, allyl glycidyl ether, butyl glycidyl ether, hexyl glycidyl ether, 2-ethylhexyl glycidyl ether and glycidyl ethers of natural alcohols such as C₈ to C₁₀ alcohols, C₁₂ to C₁₄ alcohols and C₁₃ to C₁₅ alcohols.

Preferred thereof is butandiol diglycidyl ether, neopentylglycol diglycidyl ether, hexandiol diglycidyl ether, p-tert.butylphenyl glycidyl ether, a C₁₂ to C₁₄-or C₁₃ to C₁₅ alkyl glycidyl ether, or mixtures thereof.

The epoxy resin composition may contain further ingredients.

A preferred further ingredient is a diluent with a boiling point of at least 200°C, such as the already mentioned ones. Preferred diluents are selected from benzyl alcohol, dipropylene glycol and cardanol.

Another preferred further ingredient is an accelerator such as the already mentioned ones, preferably salicylic acid, p-toluenesulfonic acid, methyl p-toluene sulfonate, calcium nitrate, 2,4,6-tris(dimethylaminomethyl)phenol or combinations thereof.

Another preferred further ingredient is an additive, such as a surfactant, stabilizer against oxidation, heat, light or UV-radiation, or a biocide.

Further optional ingredients are further reactive diluents such as epoxidized soybean oil, epoxidized linseed oil, acetoacetylated polyols, butyrolactone, carbonates, aldehydes, isocyanates or silicones with reactive groups, solvents, further amines, substances with mercapto groups, polymers, fumed silica, fibres such as glass fibres, polyamide fibres of polyethylene fibres, hollow spheres out of glass, rheology modifiers, adhesion promoters such as organoalkoxysilanes, or flame retarders.

A non-transparent epoxy resin composition according to the invention may contain further ingredients, particularly fillers such as calcium carbonates, optionally surface treated with a fatty acid, barites, talc, quartz flour, quartz sand, silicon carbide, iron mica, dolomites, wollastonites, kaolins, mica, molecular sieves, aluminium oxides, aluminium hydroxides, magnesium hydroxide, silicas, cement, gypsum, fly ashes, carbon black, graphite, metal powders, PVC powder or hollow spheres, and/or pigments such as titanium dioxide or iron oxides, and/or fibres or nano materials such as carbon fibres, metallic fibres, ceramic fibres or carbon nanotubes.

A transparent epoxy resin composition according to the invention may further contain dyes in order to get a transparent coloured look, for example blueish or greenish or reddish, similar to coloured glass.

Preferably, the epoxy resin composition according to the invention is transparent. Preferably, such a composition contains at least one stabilizer against light or UV radiation.

In the epoxy resin composition, the ratio of the number of groups that are reactive towards epoxy groups, mainly amine hydrogens, to the number of epoxy groups is preferably in the range of 0.5 to 1.5, particularly 0.7 to 1.2.

The amine hydrogens react with epoxy groups present in the composition with ring opening of the latter (addition reaction). As a result of mainly this reaction the composition undergoes polymerization and therefore cures.

The resin component and the hardener component of the epoxy resin composition are each stored in separate containers. Further ingredients of the epoxy resin composition can be part of the resin component or of the hardener component, whereas ingredients which are reactive towards amines are part of the resin component and ingredients which are reactive towards epoxides are part of the hardener component.

A suitable container for storing the resin component or the hardener component is particularly a drum, a Hobbock, a pouch, a bucket, a pail, a canister, a cartridge or a tube.

Each component is stable upon storage. This means it can be kept for several months up to a year or more before use without suffering alteration in its properties to any extent relevant for its use.

For the use of the epoxy resin composition, the resin component, the hardener component and, if present, further components are mixed with each other shortly before or during the application. The mixing ratio is preferably selected such that the amine hydrogens and the epoxy groups are in an appropriate ratio to each other, as given before. In terms of parts by weight, the mixing ratio between the resin component and the hardener component is customarily in the range from 1:10 to 10:1. The components are mixed with each other by means of a suitable method. This may take place continuously or batchwise. If mixing takes place prior to application, it should be ensured not to let elapse too much time between the mixing of the components and the application to ensure application within the pot life. Mixing takes place preferably at ambient or slightly elevated temperatures, particularly in the range from 10 to 50°C, preferably 15 to 30°C. Curing of the epoxy resin composition starts by chemical reaction upon mixing of the components, as described above. Curing typically takes place at a temperature in the range from 10 to 150°C, preferably at ambient temperatures. If desired, a post curing can be done at elevated temperatures, preferably in the range from 50 to 150°C. The time to cure is dependent on factors including temperature, reactivity of the reactive ingredients and their stochiometry and the presence of accelerators and/or diluents.

The inventive epoxy resin composition has a viscosity at 25°C, measured 2 minutes after mixing of its components by a cone/plate rheometer with a cone diameter 20 mm, cone angle 2° at a shear rate of 600 s⁻¹, in the range of 1 to 7 Pa s, preferably 2 to 5 Pa·s.

Upon curing, the inventive epoxy resin composition shows a low heat generation. Preferably its reaction enthalpy, measured by differential scanning calorimetry (DSC) in the range of 25 to 250°C at a heating rate of 10°C per minute, is less than 400 J/g, more preferably less than 380 J/g. Such a low enthalpy allows the application in thick layers without generating hot areas which can lead to bubbles and/or discolorations.

The inventive epoxy resin composition is preferably formulated in such a way, that it has a pot life, measured according to ASTM D2471-99 with 110 g of the composition, in the range of 20 to 180 min, preferably 25 to 120 min, more preferably 30 to 80 min. The pot life can be adjusted by the addition of further amines, diluents and/or accelerators.

Within this preferred pot life range, the inventive epoxy resin composition preferably has an exotherm peak temperature, measured according to ASTM D2471-99 with 110 g of the composition, of less than 180°C, particularly less than 160°C.

The inventive epoxy resin composition has a high Tg after cure. Preferably the Tg, measured by DSC in two runs in the range of 25 to 250°C at a heating rate of 10°C per minute, is higher than 50°C, more preferably higher than 55°C, particularly at least 60°C, in the second run. Such a material is durable and stable at ambient conditions.

Another subject of the invention is the use of the inventive epoxy resin composition as casting resin for the manufacturing of a cast article, preferably a decorative article such as a picture, a collage, a paperweight, a decorative globe, a tray, a table board, a side table or the like.

For this use, the epoxy resin composition is preferably applied onto a surface or into a mould. It can be applied in one layer or by applying several layers on top of each other. It is preferably applied by casting the mixed material in liquid state within its pot life onto a surface or into a mold or onto an already applied and at least partly cured layer of the epoxy resin composition.

One layer is preferably cast in a thickness of 1 to 100 mm, preferably 3 to 75 mm, more preferably 5 to 50 mm.

The surface or the mould may be such that the cured epoxy resin can be removed from the surface or from the mould without damage of the cured material to form an article by itself, or the surface or the mould is being permanently coated or filled with the cured epoxy resin composition so as they form an article together, or a combination thereof.

As long as the composition is still liquid, shaped materials such as pieces of wood or stone, dried flowers, artificial pearls or decorative flakes may be incorporated into the composition, so that they are visible in the final article for decorative purpose.

Another subject of the invention is a method to cast an article comprising the steps of
(i) mixing the components of the inventive epoxy resin composition,
(ii) pouring the mixed composition within its pot life into a mould in a layer thickness in the range of 1 to 100 mm,
(iii) optionally mixing another portion of the components of the epoxy resin composition as described in step (i), followed by pouring another layer of the mixed composition within its pot life onto the already applied, at least partly cured layer,
optionally repeating step (iii) until the article has reached its desired thickness, followed by curing the cast article.

For each step, decorative shaped materials such as pieces of wood or stone, dried flowers, coloured flakes or artificial pearls may be incorporated into the composition. This can be achieved by placing such articles in the mould or onto an already applied layer or by adding them into the freshly mixed and still fluid composition.

The mould may be of a material which can be removed from the applied composition after its cure, for example a silicone material, or it may be of a material which sticks to the cured compostion and is eventually part of the final article, for example a decorative wood, or a combination thereof.

After the epoxy resin composition is cured, the obtained article may be further treated, particularly by dragging, drilling, cutting, grinding, smoothing, rubbing, polishing or the like.

Another subject of the invention is a cast article containing the cured epoxy resin compostion according to the invention, preferably obtained by the method as described above.

Preferably, the obtained article is a decorative article, preferably selected from the group consisting of a painting, a collage, a paperweight, a decorative globe, a tray, a decorative dish, a table board and a side table.

A particularly preferred article is a table board, particularly a table board which comprises one or more pieces of wood incorporated in the cured inventive epoxy composition.

The inventive epoxy resin composition is highly transparent with a glass-like look and very robust against yellowing. It can be poured as casting resin in high layer thickness such as 5 to 50 mm and cures at ambient temperatures fast and reliably and with low heat generation to form a tack-free, transparent material with a smooth suface. It can be formulated to be free of toxic diluents such as nonylphenol.

### Examples

The following examples illustrate the present invention without being limiting.
"AHEW" means amine hydrogen equivalent weight.
"EEW' means epoxy group equivalent weight.
"Normal climate" means a temperature of 23±1°C and a relative atmospheric moisture of 50±5%.
Chemical substances not otherwise specified are from Sigma-Aldrich Chemie GmbH.

The **viscosity** was measured on a thermostated cone/plate rheometer Lamy RM200 (cone diameter 20 mm, cone angle 2°, shear rate 600 s⁻¹).

The **amine number** was determined by titration (with 0.1N HClO₄ in acetic acid against crystal violet).

### Preparation of amines of the formula (I):

**Amine A1:** 1-((2-Aminopropyl)amino)-3-(2-methylphenoxy)propane-2-ol 474 g (6.4 mol) of 1,2-propanediamine were placed in a round bottom flask under a nitrogen atmosphere and heated to 70°C, followed by the addition of 293 g (1.6 mol epoxy groups) ortho-cresyl glycidyl ether (Araldite^{®} DY-K, from Huntsman), in such a way that the temperature of the reaction mixture stayed within 70 to 85 °C. After another hour at about 80°C, the reaction mixture was cooled and freed of the volatiles, mainly unreacted 1,2-propanediamine, on a thin film evaporator (0.5-1 mbar, jacket temperature 115°C). A colorless liquid was obtained with an amine number of 479 mg KOH/g, a viscosity of 12.3 Pa·s at 20°C and an AHEW of 90 g/eq.

### Preparation of amine-functional adducts:

### Adduct B1:

750 g Jeffamine^{®} T-403 (polyoxypropylene triamine with average molecular weight Mₙ of 430 g/mol and an AHEW of 81 g/eq, from Huntsman) were placed in a round bottom flask and heated to 70°C, followed by the addition of 250 g Araldite^{®} GY 250 (bisphenol A diglycidyl ether, EEW 187 g/eq, from Huntsman), in such a way, that the temperature of the reaction mixture did not exceed 120°C. After another hour at about 100°C, the reaction mixture was cooled. A colorless liquid was obtained with a viscosity of 90 Pa·s at 20°C and an AHEW of 126 g/eq.

### Adduct B2:

850 g 1-amino-3-aminomethyl-3,5,5-trimethylcyclohexane (Vestamin^{®} IPD, AHEW of 42.6 g/eq, from Evonik) were placed in a round bottom flask and heated to 70°C, followed by the addition of 15 g Araldite^{®} GY 250 (bisphenol A diglycidyl ether, EEW 187 g/eq, from Huntsman), in such a way, that the temperature of the reaction mixture did not exceed 120°C. After another hour at about 100°C, the reaction mixture was cooled. A colorless liquid was obtained with a viscosity of 0.35 Pa·s at 20°C and an AHEW of 52.5 g/eq.

The adduct **B1** is an amine-functional adduct of a polyoxyalkylene polyamine according to the invention.

### Preparation of hardeners:

### Hardener H1 to H7:

Each hardener was prepared by mixing the ingredients given in Table 1. It was stored in a closed container.

Hardeners with "(Ref.)" are reference examples.

**Table 1: Composition (in weight parts), AHEW (calculated) and viscosity of the hardeners H1 to H7.**

| **Hardener** | **H1** | **H2** | **H3** | **H4 (Ref.)** | **H5 (Ref.)** | **H6 (Ref.)** | **H7 (Ref.)** |
|---|---|---|---|---|---|---|---|
| **Amine A1** | 45.0 | 25 | 20 | - | 50.0 | 50.0 | - |
| **Adduct B1** | 18.7 | 35 | 25 | 57.0 | - | - | 25.0 |
| **Adduct B2** | - | | 25 | - | - | 50.0 | 51.0 |
| Jeffamine^{®} T-403 | 18.8 | 30 | - | 43.0 | 50.0 | - | |
| dipropylene glycol | 17.5 | 10 | 30 | - | - | - | 24.0 |
| AHEW [g/eq] | 114 | 108 | 111 | 102 | 85.3 | 66 | 85 |
| Viscosity (25°C) [Pa·s] | 2.8 | 3.9 | 3.8 | 4.6 | 0.9 | 3.1 | 3.5 |

### Preparation of resin components:

### Resin Component-1

91.2 g bisphenol A diglycidyl ether (Araldite^{®} GY 250, EEW 187 g/eq, from Huntsman), 7.0 g 1,6-hexanediol diglycidyl ether (Araldite^{®} DY-H, EEW 142 g/mol, from Huntsman), 1.5 g UV light absorber and 0.3 g surface additives were mixed and stored in a closed container. The Resin Component-1 had a calculated EEW of 186 g/eq and a viscosity of 3.8 Pa·s at 25°C.

### Resin Component-2

89.7 g bisphenol A diglycidyl ether, 5.5 g 1,6-hexanediol diglycidyl ether, 1.5 g UV light absorber, 0.3 g surface additives and 3.0 g methyl p-toluene sulfonate were mixed and stored in a closed container. The Resin Component-2, which is an accelerated version of the Resin Component-1, had a calculated EEW of 193 g/eq and a viscosity of 4.1 Pa·s at 25°C.

### Resin Component-3

90.75 g bisphenol A diglycidyl ether, 6.55 g 1,6-hexanediol diglycidyl ether, 1.5 g UV light absorber, 0.3 g surface additives and 0.9 g methyl p-toluene sulfonate were mixed and stored in a closed container. The Resin Component-3, which is an accelerated version of the Resin Component-1 with less accelerator than Resin Component-2, had a calculated EEW of 188 g/eq and a viscosity of 3.9 Pa·s at 25°C.

### Preparation of epoxy casting resins:

### Compositions C-1 to C-8:

The resin component and the hardener given in Table 2 were prepared as described above. Then, they were blended in the proportion (weight parts) given in Table 2 and mixed by a drilling machine with a stirring rod and tested as follows: The **viscosity** was determined with a freshly mixed sample by the already given method.

The **pot life** and the **exotherm peak temperature** were determined at normal climate with a freshly mixed sample of 110 g in a plastic box with a diameter of 63 mm and a height of 65 mm according to ASTM D2471-99.

The **enthalpy** and the **Tg** value (glass transition temperature) were determined with a freshly mixed sample with a Mettler Toledo DSC 823e in the range of 25 to 250°C with a heating rate of 10°C/min in two runs according to ISO 11357-5.

The **Shore D** hardness was determined according to ISO 868 after a curing time of 16h, 24h and 7d in normal climate with a sample of 58 mm diameter and 9 mm thickness.

The **aspect** was determined with a cured sample (7d in normal climate) of 58 mm diameter and 9 mm thickness by placing it onto a white graph paper to judge its transparency by eye.

The **yellowing** was determined with a cured sample of 58 mm diameter and 9 mm thickness by placing it on the outside of a south facing window in vertical position for 21 days. Then, the sample was put onto a white graph paper next to an identical sample, which has not been exposed to UV-light, and the difference in yellowing between the two samples was judged by eye.

The compositions and test results are given in Table 2.

Compositions with "(Ref.)" are reference examples.

The commercial casting resin Translux D 154 (2 component transparent epoxy resin containing nonylphenol, from Sika Advanced Resins) was mixed and tested in the same way and cited in Table 2 as a reference example.

**Table 2: Composition (in weight parts) of the compositions C-1 to C-8 and properties of Translux D 154 and the compositions C1 to C8.**

| **Composition** | | **C-1** | **C-2** | **C-3** | **C-4** |
|---|---|---|---|---|---|
| **Resin Component** | | **-1** | **-2** | **-2** | **-3** |
| | | 100.0 | 100.0 | 100.0 | 100.0 |
| **Hardener** | | **H1** | **H1** | **H2** | **H3** |
| | | 61.0 | 60.0 | 60.0 | 60.0 |
| Viscosity (25°C) [Pa·s] | | 3.5 | 3.6 | 3.9 | 3.6 |
| Pot Life [min] | | 112 | 40 | 54 | 50 |
| Exotherm peak temperature [°C] | | 82 | 150 | 151 | 125 |
| Reaction Enthalpy [J/g] | | 340 | 361 | 321 | 326 |
| Tg (2^{nd} run) [°C] | | 67 | 61 | 69 | 70 |
| Shore D | 16h | 65 | 74 | 79 | 76 |
| | 24h | 78 | 78 | 79 | 76 |
| | 7d | 86 | 84 | 84 | 85 |
| Aspect | | fully clear | fully clear | fully clear | fully clear |
| Yellowing | | no | no | no | no |

**Table 2: (continued)**

| | | | | | | |
|---|---|---|---|---|---|---|
| **Composition** | | **C-5 (Ref.)** | **C-6 (Ref.)** | **C-7 (Ref.)** | **C-8 (Ref.)** | **Translux D 154 (Ref.)** |
| **Resin Component** | | **-2** | **-1** | **-1** | **-1** | |
| | | 100.0 | 100.0 | 100.0 | 100.0 | |
| **Hardener** | | **H4** | **H5** | **H6** | **H7** | |
| | | 53.0 | 46.0 | 36.0 | 46.0 | |
| Viscosity (25°C) [Pa·s] | | 4.6 | 2.1 | 3.6 | 3.5 | 3.4 |
| Pot Life [min] | | 78 | 118 | 65 | 71 | 40 |
| Exotherm peak temperature [°C] | | 112 | 111 | 188 | 148 | 137 |
| Reaction Enthalpy [J/g] | | 338 | 416 | 406 | 370 | 335 |
| Tg (2^{nd} run) [°C] | | 80 | 82 | 113 | 91 | 44 |
| Shore D | 16h | 74 | 67 | 77 | 81 | 74 |
| | 24h | 80 | 78 | 81 | 83 | 78 |
| | 7d | 86 | 86 | 87 | 86 | 84 |
| Aspect | | hazy | fully clear | fully clear | hazy | fully clear |
| Yellowing | | no | no | no | no | some |

Table 2 shows that the exotherm peak temperature is influenced by the addition of accelerators to speed up the pot life and the curing, whereas the reaction enthalpy is not much influenced (see Compositions **C-1** and **C-2**). To get a good performance, a maximum reaction enthalpy of not more than 400 J/g, preferably less than 380 J/g, is beneficial.

Tg values of 55°C and more are beneficial to get a good durability.

## Claims

1. A hardener for epoxy resins comprising
- at least one amine of the formula (I),
where 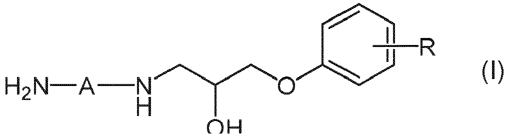
A is a divalent C₂ to C₁₅ alkylene, cycloalkylene or arylalkylene group, and
R is a C₁ to C₁₅ alkyl group optionally containing unsaturated bonds, and
- an amine-functional adduct of at least one polyoxyalkylene polyamine and a diepoxide.

2. Hardener according to claim 1, wherein A is 1,2-propylene and R is ortho-methyl.

3. Hardener according to any one of claims 1 to 2, wherein the polyoxyalkylene polyamine of the amine-functional adduct is selected from the group consisting of 4,7,10-trioxatridecane-1,13-diamine, α,ω-polyoxypropylene diamines with an average molecular weight Mₙ in the range of 170 to 500 g/mol and polyoxypropylene triamines with an average molecular weight Mₙ in the range of 300 to 500 g/mol measured by the relevant method in accordance with the description.

4. Hardener according to any one of claims 1 to 3, wherein the amine-functional adduct is an amine-functional adduct of at least one polyoxypropylene triamine with an average molecular weight Mₙ in the range of 300 to 500 g/mol and a bisphenol A diglycidyl ether or bisphenol F diglycidyl ether or bisphenol A/F diglycidyl ether, wherein Mn was measured by the relevant method in accordance with the description.

5. Hardener according to any one of claims 1 to 4, wherein the amine-functional adduct is prepared by reacting the polyoxyalkylene polyamine and the diepoxide in a molar ratio of polyoxyalkylene polyamine molecules per mol epoxy groups of the diepoxide in the range of 1.05 to 5, preferably 1.1 to 3, more preferably 1.1 to 2.

6. Hardener according to any one of claims 1 to 5, wherein the weight ratio between the amines of the formula (I) and the amine-functional adduct of at least one polyoxyalkylene polyamine and a diepoxide is in the range of 0.2/1 to 10/1, preferably 0.4/1 to 5/1.

7. Hardener according to any one of claims 1 to 6, which contains at least one further amine selected from the group consisting of N-benzyl-1,2-ethanediamine, N-benzyl-1,2-propanediamine, 2,2(4),4-trimethyl-1,6-hexanediamine, 1,2-, 1,3- or 1,4-diaminocyclohexane, 1,3-bis(aminomethyl)cyclohexane, 1,4-bis(aminomethyl)cyclohexane, bis(4-aminocyclohexyl)methane, 1-amino-3-aminomethyl-3,5,5-trimethylcyclohexane, 2(4)-methyl-1,3-diaminocyclohexane, 1,3-bis(aminomethyl)benzene, polyoxypropylene diamines with an average molecular weight Mₙ in the range of 170 to 500 g/mol, polyoxypropylene triamines with an average molecular weight Mₙ in the range of 300 to 500 g/mol, triethylenetetramine, tetraethylenepentamine, pentaethylenehexamine, N,N'-bis(3-aminopropyl)ethylenediamine and mixtures thereof, wherein Mn was measured by the relevant method in accordance with the description.

8. Hardener according to claim 7, wherein the further amine is a polyoxypropylene diamine with an average molecular weight Mₙ in the range of 170 to 500 g/mol or a polyoxypropylene triamine with an average molecular weight Mₙ in the range of 300 to 500 g/mol measured by the relevant method in accordance with the description.

9. Hardener according to claim 7, wherein the further amine is 1-amino-3-aminomethyl-3,5,5-trimethylcyclohexane, preferably as part of an amine-functional adduct with a diepoxide.

10. An epoxy resin composition comprising
- a resin component comprising at least one epoxy resin, and
- a hardener component comprising the hardener according to any one of claims 1 to 9.

11. Epoxy resin composition according to claim 10, which is transparent.

12. Epoxy resin composition according to claim 10 or 11, which upon curing has a reaction enthalpy, measured by differential scanning calorimetry in the range of 25 to 250°C at a heating rate of 10°C per minute, of less than 400 J/g.

13. The use of the epoxy resin composition according to any one of claims 10 to 12 as casting resin for the manufacturing of a cast article.

14. A method to cast an article comprising the steps of
(i) mixing the components of the epoxy resin composition according to any one of claims 10 to 12,
(ii) pouring the mixed composition within its pot life into a mould in a layer thickness in the range of 1 to 100 mm,
(iii) optionally mixing another portion of the components of the epoxy resin composition as described in step (i), followed by pouring another layer of the mixed composition within its pot life onto the already applied, at least partly cured layer,
optionally repeating step (iii) until the article article has reached its desired thickness, followed by curing the cast article.

15. A cast article containing the cured epoxy resin composition according to any one of claims 10 to 12, preferably obtained by the method according to claim 14.

## Patentansprüche

1. Härter für Epoxidharze, umfassend
- mindestens ein Amin der Formel (I), 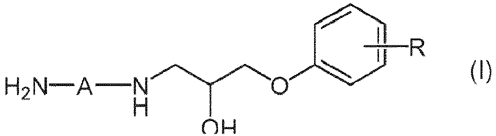 wobei
A für eine zweiwertige C₂- bis C₁₅-Alkylen-, Cycloalkylen- oder Arylalkylengruppe steht und
R für eine C₁- bis C₁₅-Alkylgruppe, die gegebenenfalls ungesättigte Bindungen enthält, steht, und
- ein aminfunktionelles Addukt von mindestens einem Polyoxyalkylenpolyamin und einem Diepoxid.

2. Härter nach Anspruch 1, wobei A für 1,2-Propylen steht und R für ortho-Methyl steht.

3. Härter nach einem der Ansprüche 1 bis 2, wobei das Polyoxyalkylenpolyamin des aminfunktionellen Addukts aus der Gruppe bestehend aus 4,7,10-Trioxatridecan-1,13-diamin, α,ω-Polyoxypropylendiaminen mit einem mittleren Molekulargewicht Mₙ im Bereich von 170 bis 500 g/mol und Polyoxypropylentriaminen mit einem mittleren Molekulargewicht Mₙ im Bereich von 300 bis 500 g/mol, gemessen nach der relevanten Methode gemäß der Beschreibung, ausgewählt ist.

4. Härter nach einem der Ansprüche 1 bis 3, wobei es sich bei dem aminfunktionellen Addukt um ein aminfunktionelles Addukt von mindestens einem Polyoxypropylentriamin mit einem mittleren Molekulargewicht Mₙ im Bereich von 300 bis 500 g/mol und einem Bisphenol-A-diglycidylether oder Bisphenol-F-diglycidylether oder Bisphenol-A/F-diglycidylether handelt, wobei Mₙ nach der relevanten Methode gemäß der Beschreibung gemessen wurde.

5. Härter nach einem der Ansprüche 1 bis 4, wobei das aminfunktionelle Addukt durch Umsetzen des Polyoxyalkylenpolyamins und des Diepoxids in einem Molverhältnis von Polyoxyalkylenpolyamin-Molekülen pro Mol Epoxidgruppen des Diepoxids im Bereich von 1,05 bis 5, vorzugsweise 1,1 bis 3, weiter bevorzugt 1,1 bis 2, hergestellt wird.

6. Härter nach einem der Ansprüche 1 bis 5, wobei das Gewichtsverhältnis zwischen den Aminen der Formel (I) und dem aminfunktionellen Addukt von mindestens einem Polyoxyalkylenpolyamin und einem Diepoxid im Bereich von 0,2/1 bis 10/1, vorzugsweise 0,4/1 bis 5/1, liegt.

7. Härter nach einem der Ansprüche 1 bis 6, der mindestens ein weiteres Amin enthält, das aus der Gruppe bestehend aus N-Benzyl-1,2-ethandiamin, N-Benzyl-1,2-propandiamin, 2,2(4),4-Trimethyl-1,6-hexandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, 1-Amino-3-aminomethyl-3,5,5-trimethylcyclohexan, 2(4)-Methyl-1,3-diaminocyclohexan, 1,3-Bis(aminomethyl) benzol, Polyoxypropylendiaminen mit einem mittleren Molekulargewicht Mₙ im Bereich von 170 bis 500 g/mol, Polyoxypropylentriaminen mit einem mittleren Molekulargewicht Mₙ im Bereich von 300 bis 500 g/mol, Triethylentetramin, Tetraethylenpentamin, Pentaethylenhexamin, N,N'-Bis(3-aminopropyl)ethylendiamin und Mischungen davon ausgewählt ist, wobei Mₙ nach der relevanten Methode gemäß der Beschreibung gemessen wurde.

8. Härter nach Anspruch 7, wobei es sich bei dem weiteren Amin um ein Polyoxypropylendiamin mit einem mittleren Molekulargewicht Mₙ im Bereich von 170 bis 500 g/mol oder ein Polyoxypropylentriamin mit einem mittleren Molekulargewicht Mₙ im Bereich von 300 bis 500 g/mol, gemessen nach der relevanten Methode gemäß der Beschreibung, handelt.

9. Härter nach Anspruch 7, wobei es sich bei dem weiteren Amin um 1-Amino-3-aminomethyl-3,5,5-trimethylcyclohexan, vorzugsweise als Teil eines aminfunktionellen Addukts mit einem Diepoxid, handelt.

10. Epoxidharzzusammensetzung, umfassend
- eine Harzkomponente, die mindestens ein Epoxidharz umfasst, und
- eine Härterkomponente, die den Härter nach einem der Ansprüche 1 bis 9 umfasst.

11. Epoxidharzzusammensetzung nach Anspruch 10, die transparent ist.

12. Epoxidharzzusammensetzung nach Anspruch 10 oder 11, die bei Härtung eine durch dynamische Differenzkalorimetrie im Bereich von 25 bis 250 °C mit einer Aufheizrate von 10 °C pro Minute gemessene Reaktionsenthalpie von weniger als 400 J/g aufweist.

13. Verwendung der Epoxidharzzusammensetzung nach einem der Ansprüche 10 bis 12 als Gießharz zur Herstellung eines Gussgegenstands.

14. Verfahren zum Gießen eines Gegenstands, das folgende Schritte umfasst:
(i) Mischen der Komponenten der Epoxidharzzusammensetzung nach einem der Ansprüche 10 bis 12,
(ii) Gießen der gemischten Zusammensetzung innerhalb ihrer Topfzeit in eine Form in einer Schichtdicke im Bereich von 1 bis 100 mm,
(iii) gegebenenfalls Mischen eines weiteren Teils der Komponenten der Epoxidharzzusammensetzung wie in Schritt (i) beschrieben und anschließendes Gießen einer weiteren Schicht der gemischten Zusammensetzung innerhalb ihrer Topfzeit auf die bereits aufgebrachte, zumindest teilweise gehärtete Schicht,
wobei Schritt (iii) gegebenenfalls wiederholt wird, bis der Gegenstand seine gewünschte Dicke erreicht hat, gefolgt von Härten des Gussgegenstands.

15. Gussgegenstand, enthaltend die gehärtete Epoxidharzzusammensetzung nach einem der Ansprüche 10 bis 12, vorzugsweise erhalten durch das Verfahren nach Anspruch 14.

## Revendications

1. Agent de durcissement pour des résines époxy comprenant
- au moins une amine de la formule (I) 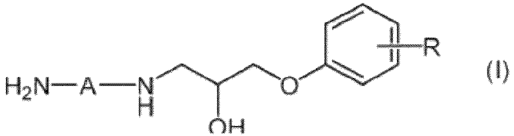 dans laquelle
A est un groupe alkylène, cycloalkylène ou arylalkylène divalent en C₂ à C₁₅, et
R est un groupe alkyle en C₁ à C₁₅ , éventuellement contenant des liaisons insaturées, et
- un adduit fonctionnalisé par une amine d'au moins une polyoxyalkylène polyamine et d'un diépoxyde.

2. Agent de durcissement selon la revendication 1, A étant le 1,2-propylène et R étant ortho-méthyle.

3. Agent de durcissement selon l'une quelconque des revendications 1 à 2, la polyoxyalkylène polyamine de l'adduit fonctionnalisé par une amine étant choisi dans le groupe constitué par la 4,7,10-trioxatridécane-1,13-diamine, des α,ω-polyoxypropylène diamines dotées d'un poids moléculaire moyen Mₙ dans la plage de 170 à 500 g/mole et des polyoxypropylène triamines dotées d'un poids moléculaire moyen Mₙ dans la plage de 300 à 500 g/mole mesuré par le procédé pertinent conformément à la description.

4. Agent de durcissement selon l'une quelconque des revendications 1 à 3, l'adduit fonctionnalisé par une amine étant un adduit fonctionnalisé par une amine d'au moins une polyoxypropylène triamine dotée d'un poids moléculaire moyen Mₙ dans la plage de 300 à 500 g/mole et d'un éther de diglycidyle de bisphénol A ou d'un éther de diglycidyle de bisphénol F ou d'un éther de diglycidyle de bisphénol A/F, Mn ayant été mesuré par le procédé pertinent conformément à la description.

5. Agent de durcissement selon l'une quelconque des revendications 1 à 4, l'adduit fonctionnalisé par une amine étant préparé par mise en réaction de la polyoxyalkylène polyamine et du diépoxyde en un rapport molaire de molécules de polyoxyalkylène polyamine par mole de groupes époxy du diépoxyde dans la plage de 1,05 à 5, préférablement de 1,1 à 3, plus préférablement de 1,1 à 2.

6. Agent de durcissement selon l'une quelconque des revendications 1 à 5, le rapport en poids entre les amines de la formule (I) et l'adduit fonctionnalisé par une amine d'au moins une polyoxyalkylène polyamine et d'un diépoxyde étant dans la plage de 0,2/1 à 10/1, préférablement de 0,4/1 à 5/1.

7. Agent de durcissement selon l'une quelconque des revendications 1 à 6, qui contient au moins une amine supplémentaire choisie dans le groupe constitué par la N-benzyl-1,2-éthaneediamine, la N-benzyl-1,2-propanediamine, la 2,2(4),4-triméthyl-1,6-hexanediamine, le 1,2-diaminocyclohexane, le 1,3-diaminocyclohexane ou le 1,4-diaminocyclohexane, le 1,3-bis(aminométhyl)cyclohexane, le 1,4-bis(aminométhyl)cyclohexane, le bis(4-aminocyclohexyl)méthane, le 1-amino-3-aminométhyl-3,5,5-triméthylcyclohexane, le 2(4)-méthyl-1,3-diaminocyclohexane, le 1,3-bis(aminométhyl)benzène, des polyoxypropylène diamines dotées d'un poids moléculaire moyen Mₙ dans la plage de 170 à 500 g/mole et des polyoxypropylène triamines dotées d'un poids moléculaire moyen Mₙ dans la plage de 300 à 500 g/mole, la triéthylènetétramine, la tétraéthylènepentamine, la pentaéthylènehexamine, la N,N'-bis(3-aminopropyl)éthylènediamine et des mélanges correspondants, Mn ayant été mesuré par le procédé pertinent conformément à la description.

8. Agent de durcissement selon la revendication 7, l'amine supplémentaire étant une polyoxypropylène diamine dotée d'un poids moléculaire moyen Mₙ dans la plage de 170 à 500 g/mole ou une polyoxypropylène triamine dotée d'un poids moléculaire moyen Mₙ dans la plage de 300 à 500 g/mole mesuré par le procédé pertinent conformément à la description.

9. Agent de durcissement selon la revendication 7, l'amine supplémentaire étant le 1-amino-3-aminométhyl-3,5,5-triméthylcyclohexane, préférablement comme partie d'un adduit fonctionnalisé par une amine avec un diépoxyde.

10. Composition de résine époxy comprenant
- un composant de type résine comprenant au moins une résine époxy, et
- un composant de type agent de durcissement comprenant l'agent de durcissement selon l'une quelconque des revendications 1 à 9.

11. Composition de résine époxy selon la revendication 10, qui est transparente.

12. Composition de résine époxy selon la revendication 10 ou 11, qui, en durcissant, possède une enthalpie de réaction, mesurée par calorimétrie différentielle à balayage dans la plage de 25 à 250 °C à une vitesse de chauffage de 10 °C par minute, de moins de 400 J/g.

13. Utilisation de la composition de résine époxy selon l'une quelconque des revendications 10 à 12 en tant que résine de coulée pour la fabrication d'un article coulé.

14. Procédé pour couler un article comprenant les étapes de
(i) mélange des composants de la composition de résine époxy selon l'une quelconque des revendications 10 à 12,
(ii) versement de la composition mélangée pendant son temps de maniabilité dans un moule en une épaisseur de couche dans la plage de 1 à 100 mm,
(iii) éventuellement mélange d'une autre portion des composants de la composition de résine époxy tel que décrit dans l'étape (i), suivi par le versement d'une autre couche de la composition mélangée pendant son temps de maniabilité sur la couche déjà appliquée, au moins partiellement durcie,
éventuellement répétition de l'étape (iii) jusqu'à ce que l'article ait atteint son épaisseur souhaitée, suivie par le durcissement de l'article coulé.

15. Article coulé contenant la composition de résine époxy durcie selon l'une quelconque des revendications 10 à 12, préférablement obtenu par le procédé selon la revendication 14.
